# EUROPÄISCHE PATENTSCHRIFT

(11) **EP 1 002 662 B1**
(45) Veröffentlichungstag und Bekanntmachung des Hinweises auf die Patenterteilung: **28.05.2003**
(21) Anmeldenummer: 99123039.2
(22) Anmeldetag: 19.11.1999
(51) Int. Cl.: B42D 15/02, G11B 7/24, G11B 23/40

(54) **CD-Visitenkarte**
CD visiting card
CD carte de visite

(30) Priorität: 21.11.1998 DE 29820749 U
(43) Veröffentlichungstag der Anmeldung: 24.05.2000
(73) Patentinhaber: Ziggel, Carsten, 22085 Hamburg (DE)
(72) Erfinder: Ziggel, Carsten, 22085 Hamburg (DE)
(74) Vertreter: Patentanwälte Hauck, Graalfs, Wehnert, Döring, Siemons, Schildberg

(56) Entgegenhaltungen:
- CH-A- 688 996

## Beschreibung

Die vorliegende Erfindung bezieht sich auf eine CD-Visitenkarte.

Bei herkömmlichen Visitenkarten werden auf einem ca. 54 mm x 85 mm großen Karton persönliche Informationen des Absenders wie z.B. Name, Adresse, Firmenzugehörigkeit, Position innerhalb der Firma oder Informationen betreffend die Firma aufgedruckt.

Ferner ist die Tendenz zu beobachten, auf Visitenkarten immer mehr Informationen aufzudrucken. Für diesen Zweck werden Visitenkarten häufig beidseitig bedruckt oder als Faltblatt ausgeführt.

Des weiteren wird vielfach versucht, Visitenkarten durch grafische Gestaltung oder Formgestaltung des Kartons ein besonders gefälliges Erscheinungsbild zu verleihen, um sich selbst bzw. seine Firma in besonders vorteilhafter Weise zu präsentieren.

Bereits bekannt geworden ist eine Visitenkarte, die aus einer Compact Disc (CD) besteht, die Scheckkartenformat einhalten soll und auf der Informationen über den Absender optisch gespeichert sind. Die CD hat zwei gerade Längsseiten und ist an ihren gegenüberliegenden Schmalseiten gewölbt ausgeführt mit einem Außenmaß von 80 mm. Sie entspricht damit einer sogenannten Mini-CD, die auf zwei einander gegenüberliegenden Seiten bis auf eine Breite von 54 mm abgeschnitten wurde. Infolgedessen läßt sie sich wie eine Mini-CD in CD-ROM Laufwerke einlegen und abspielen.

Bei dieser CD-Visitenkarte ist jedoch nachteilig, daß sie ein sehr gedrungenes Erscheinungsbild aufweist, das sehr von dem einer üblichen Visitenkarte abweicht, so daß ihre Funktion schwer erkennbar ist und sie nicht ähnlich einer üblichen Visitenkarte oder Scheckkarte handhabbar ist.

Weiterhin ist aus dem Dokument CH-A- 688996 eine CD-Visitenkarte ausgestaltet als Compact Disc bekannt geworden, die im wesentlichen vierechig ausgebildet ist und Zentriernocken zu ihrer zentrierten Aufnahme in einen CD - Laufwerk aufweist. Die Herstellung der Zentriernocken erfolgt durch einen Stanzvorgang. Dabei entstehen auf der bedruchbaren Oberseite der Visitenharte minimale Einbuchtungen.

Davon ausgehend liegt der Erfindung die Aufgabe zugrunde, eine CD-Visitenkarte zu schaffen, deren Erscheinungsbild einer herkömmlichen Visitenkarte aus Karton oder Scheckkarte besser entspricht und die ähnlich wie eine herkömmliche Visitenkarte oder Scheckkarte handhabbar ist.

Die Aufgabe wird durch eine CD-Visitenkarte mit den Merkmalen des Anspruches 1 gelöst. Vorteilhafte Ausgestaltungen sind in den Unteransprüchen angegeben.

Die erfindungsgemäße CD-Visitenkarte ist ausgestaltet als Compact Disc, deren maximale Breite 110 mm und deren maximale Höhe 70 mm nicht überschreitet und auf deren Unterseite Informationen über den Verteiler oder Absender optisch gespeichert sind. Ferner weist sie an der Unterseite einen inneren Bereich mit einem konvexen Außenrand auf, der einen Radius von etwa 4 cm um ihren Mittelpunkt hat, und hat sie angrenzend an den Außenrand mindestens einen abgesenkten Außenbereich.

Somit ist zwischen dem inneren Bereich und dem abgesenkten Außenbereich ein Absatz vorhanden, der einen Abstand von 4 cm um den Mittelpunkt der Compact Disc hat. Dieser Absatz dient dazu, die Compact Disc in der kleinen Zentrieraufnahme eines CD-Laufwerkes zu zentrieren, die der Aufnahme einer herkömmlichen Mini-CD dient. Die Zentrierung der Compact Disc wird also erreicht, ohne deren Außenabmessungen auf die einer Mini-CD zu beschränken. Hierdurch wird es möglich, der Compact Disc das Format einer üblichen Visitenkarte (maximal 110 cm x 70 mm) oder einer üblichen Scheckkarte (etwa 85 mm x 54 mm) zu geben, so daß ihr im wesentlichen das äußere Erscheinungsbild einer herkömmlichen Visitenkarte aus Karton oder einer üblichen Scheckkarte mit entsprechenden Bedruckungs-, Beschriftungsund Handhabungsmöglichkeiten gegeben werden kann.

Vorzugsweise hat dabei die CD-ROM eine Stärke von etwa 1 bis 2 mm und ist ihr Außenbereich um maximal 0,8 mm abgesenkt. Hierdurch wird insbesondere eine zu starke Schwächung des Außenbereiches vermieden, die Beschädigungen zur Folge haben könnte. Der Datenbereich mit den Informationen über den Verteiler oder Absender ist vorzugsweise in einem kreisrunden Bereich innerhalb des inneren Bereichs der Compact Disc untergebracht.

Bei der Compact Disc kann es sich um einen beschreibbaren oder beschriebenen oder um einen wiederbeschreibbaren Compact Disc Rohling handeln.

Eine erfindungsgemäße CD-Visitenkarte hat den Vorteil, daß auf ihr eine Vielzahl von Informationen gespeichert werden können. Sie kann von jedem CD-Spieler oder PC mit CD-ROM Laufwerk abgespielt werden, d.h. von praktisch allgemein verfügbaren Gerätschaften. Darüber hinaus können die eingespielten Daten im PC direkt für weitere Arbeiten genutzt werden, beispielsweise im Rahmen einer Textverarbeitung. Weiterhin können diese CD-Visitenkarten in herkömmlichen CD-Brennern oder DVD-Brennern beschrieben bzw. wiederbeschrieben werden.

Da die aus der Compact Disc bestehende Visitenkarte sehr viel Daten speichern kann, ist es dem Absender bzw. Verteiler nunmehr möglich, sich oder seine Firma in stark erweiterter Form zu präsentieren. Dies kann beispielsweise mit Hilfe von Musik, Videoclips, Bildern, geschriebenen oder gesprochenen Texten geschehen, die der Empfänger dann auf seinem PC oder anderen elektronischen Abspielgeräten sichtbar machen kann. Zumindest die Oberseite der CD-Visitenkarte kann beschreibbar und/oder bedruckbar sein, wie bei einer Kartonausführung.

Bevorzugt sind auf der Compact Disc persönliche Daten des Absenders oder Informationen seiner Firma aufgedruckt. Hierdurch kann der Empfänger eine erste Information über den Verteiler ohne elektronisches Hilfsgerät entnehmen, bevor er in der Lage ist, die ausführliche, elektronisch oder digital gespeicherte Präsentation abzurufen.

Bevorzugt ist die als Compact Disc ausgeführte Visitenkarte im wesentlichen rechteckig ausgebildet. Dann kann sie über vier abgerundete Ecken verfügen, deren Krümmungsradius 7,5 mm nicht überschreitet. Bei entsprechender Ausführung kann die CD-Visitenkarte in bekannter Weise in bestehende Schutzhüllen für Scheckkarten oder entsprechende Taschen im Portemonnaie eingeführt werden.

Wenn die Daten in herkömmlichem Beschreibungsverfahren auf der Compact Disc abgespeichert sind, können insbesondere bis zu 20 MB gespeichert werden. Bei Speicherung der Daten in DVD-Technik können bis zu 500 MB abgespeichert sein.

Weitere Vorteile der erfindungsgemäßen CD-Visitenkarte ergeben sich aus der Beschreibung und aus der beigefügten Zeichnung eines Ausführungsbeispieles. Die vorstehend genannten und die anhand der Beispielsbeschreibung noch ausgeführten Merkmale können erfindungsgemäß jeweils einzeln oder in beliebigen Kombinationen miteinander verwendet werden. In der Zeichnung zeigen:
Fig. 1 die Oberseite der CD-Visitenkarte;
Fig. 2 die Unterseite der CD-Visitenkarte;
Fig. 3 die CD-Visitenkarte in einem Vertikalschnitt.

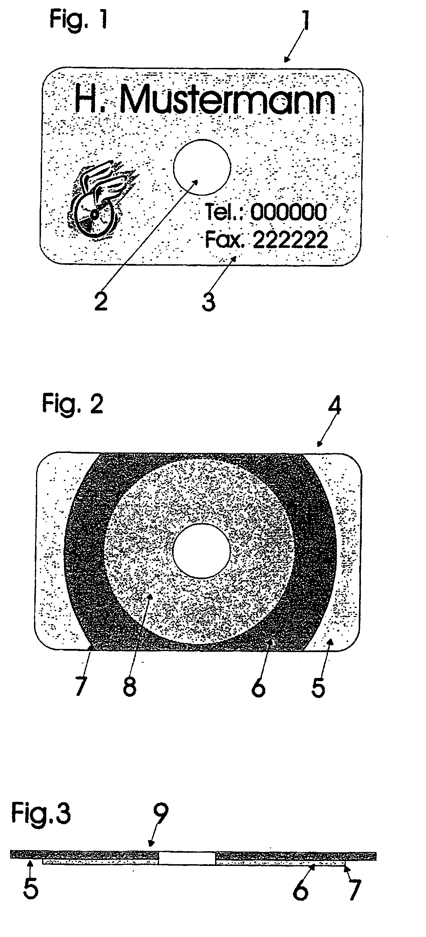

Die in der Fig. 1 gezeigte CD-Visitenkarte 1 ist rechteckig und im Scheckkartenformat (etwa 85 mm x 54 mm) ausgebildet. Ihre Stärke beträgt etwa 1 mm. In der Mitte weist sie eine Öffnung 2 zum Fixieren bzw. Einführen eines Antriebsdomes eines CD-Abspielgerätes bzw. -Laufwerkes auf. Die flache Oberseite 3 der CD-Visitenkarte ist beschreib- und/oder bedruckbar.

Fig. 2 zeigt die Unterseite der CD-Visitenkarte 1. Diese hat zwei um 0,5 mm abgesenkte Außenbereiche 5, die konkav gerundete innere Ränder haben. Ferner hat sie an der Unterseite 4 einen nicht abgesenkten, inneren Bereich 6, der auch als Zentrierungs- oder Justierungsbereich bezeichnet werden kann, aufgrund seines konvex mit einem Radius von 4 cm um den Mittelpunkt der CD-Visitenkarte 1 bzw. ihrer Öffnung 2 gekrümmten Außenrandes. Innerhalb des inneren Bereiches 6 hat die CD-Visitenkarten einen kreisrunden Datenbereich 8.

Der innere Bereich 6 und die äußeren Bereiche 5 der Unterseite 4 sind jeweils flach. Zwischen dem inneren Bereich 6 und den Außenbereichen 5 ist jedoch an dem Außenrand 7 ein Absatz vorhanden.

Vorstehendes wird durch den Vertikalschnitt durch die CD-Visitenkarte 1 gemäß Fig. 3 verdeutlicht.

Auf der CD-Visitenkarte 1 sind im Datenbereich 8 optische Informationen über den Absender oder Verteiler gespeichert. Bei herkömmlicher Beschreibungstechnik kann sie bis zu 20 Megabyte (MB) speichern und bei einer Beschreibung mit DVD-Technik bis zu 500 MB. Darüber hinaus kann der Verteiler die CD-Visitenkarte mit einem CD-Brenner selbst mit Daten versehen oder bei einer wiederbeschreibbaren Compact Disc mit einem entsprechenden CD-Brenner mehrmals beschreiben.

Hieraus ergibt sich für den Verteiler die Möglichkeit, sich oder seine Firma multimedial darzustellen, über geschriebene oder gesprochene Texte, Videoclips, Musik, Bilder u.ä.. Der Empfänger oder Kunde kann diese Informationen dann auf seinem PC oder sonstigem elektronischem Abspielgerät sichtbar machen. Bei der wiederbeschreibbaren Version können die Daten jederzeit ergänzt, erneuert oder aktualisiert werden. Dies eröffnet dem Verteiler die Möglichkeit, sich besonders aktuell, vielfältig und unkonventionell zu präsentieren.

In einer anderen, nicht dargestellten Ausführungsform, sind auf der Oberseite der CD-Visitenkarte in herkömmlicher Weise Texte, kleinere Bilder, Fotos bzw. Hologramme angebracht, die ebenfalls Informationen über den Verteiler wiedergeben können.

Auch sind andere Konturen der Visitenkarten als bei der gezeigten Rechteckform möglich, wobei jedoch zu beachten ist, daß die Visitenkarte das übliche Format von herkömmlichen Visitenkarten (110 bis 70 mm) nicht überschreitet.

Die Visitenkarte kann aus den für Compact Discs üblichen Materialien (Kunststoff, Metallfolien etc.) bestehen. Darüber hinaus ist es möglich, daß sie an der Oberseite eine Schicht mit besonders günstigen Beschriftungs- oder Bedruckungseigenschaften hat bis hin zu einer Schicht aus Karton.

## Patentansprüche

1. CD-Visitenkarte ausgestaltet als Compact Disc (1), deren maximale Breite 110 mm und deren maximale Höhe 70 mm nicht überschreitet und auf deren Unterseite (4) Informationen über den Verteiler oder Absender optisch gespeichert oder speicherbar sind, die an der Unterseite (4) einen inneren Bereich (6) mit einem konvexen Außenrand (7) aufweist, der einen Radius von etwa 4 cm um ihren Mittelpunkt hat, und die angrenzend an den Außenrand (7) mindestens einen abgesenkten Außenbereich (5) hat.

2. CD-Visitenkarte nach Anspruch 1, bei der die Compact Disc (1) im wesentlichen viereckig ausgebildet ist.

3. CD-Visitenkarte nach Anspruch 2, **dadurch gekennzeichnet, daß** die Compact Disc (1) abgerundete Ecken aufweist, deren Krümmungsradius maximal 7,5 mm beträgt.

4. CD-Visitenkarte nach einem der Ansprüche 1 bis 3, **dadurch gekennzeichnet, daß** die Compact Disc (1) Scheckkartenformat hat.

5. CD-Visitenkarte nach einem der Ansprüche 1 bis 4, **dadurch gekennzeichnet, daß** die Compact Disc (1) eine Breite von etwa 85 mm und/oder eine Höhe von etwa 54 mm und/oder eine Stärke von etwa 1 bis 2 mm und/oder einen um maximal 0,8 mm abgesenkten Außenbereich (5) hat.

6. CD-Visitenkarte nach einem der Ansprüche 1 bis 5, **dadurch gekennzeichnet, daß** der innere Bereich (6) einen kreisrunden Datenbereich (8) umfaßt.

7. CD-Visitenkarte nach einem der Ansprüche 1 bis 6, **dadurch gekennzeichnet, daß** zwei voneinander beabstandete Außenbereiche (5) vorhanden sind.

8. CD-Visitenkarte nach einem der Ansprüche 1 bis 7, **dadurch gekennzeichnet, daß** die Compact Disc (1) mittels eines CD-Brenners oder DVD-Brenners beschreibbar und/oder beschrieben und/oder wiederbeschreibbar ist.

## Claims

1. CD-visiting card shaped as a compact disc (1), the maximum width of which does not exceed 110 mm and the maximum height of which does not exceed 70 mm, and on the bottom side (4) of which informations about the distributor or sender are optically stored or storable, which has on the bottom side (4) an inner region (6) with a convex outer edge (7), which has a radius of about 4 cm around its centre point, and which has at least one lowered outer region (5) abutting on the outer edge (7).

2. CD-visiting card according to claim 1, the compact disc (1) being shaped essentially rectangularly.

3. CD-visiting card according to claim 2, **characterised in that** the compact disc (1) has rounded-off edges, the radius of curvature of which is 7.5 mm maximum.

4. CD-visiting card according to one of claims 1 to 3, **characterised in that** the compact disc (1) has the dimensions of a cheque card.

5. CD-visiting card according to one of claims 1 to 4, **characterised in that** the compact disc (1) has a width of about 85 mm and/or a height of about 54 mm and/or a thickness of about 1 to 2 mm and/or an outer region (5) lowered by 0.8 mm maximum.

6. CD-visiting card according to one of claims 1 to 5, **characterised in that** the inner region (6) comprises a circular data region (8).

7. CD-visiting card according to one of claims 1 to 6, **characterised in that** two outer regions (5), spaced apart from each other, do exist.

8. CD-visiting card according to one of claims 1 to 7, **characterised in that** the compact disc (1) is writable and/or written and/or rewritable by means of a CD-writer or a DVD-writer.

## Revendications

1. Carte de visite en CD-ROM, formée comme disque compact (1), dont la largeur maximale ne dépasse pas 110 mm et dont le hauteur maximal ne dépasse pas 70mm, et dans le coté de dessous (4) de laquelle des informations sur le distributeur ou l'envoyeur sont enregistrés ou enregistrables, qui comprend dans le coté de dessous (4) une zone intérieure (6) avec un bord extérieur convexe (7) avec un rayon d'environ 4 cm autour de son centre, et qui présente une zone extérieure abaissée (5) adjacente au bord extérieur (7).

2. Carte de visite en CD-ROM selon la revendication 1, dans laquelle le disque compact (1) est formé essentiellement quadrangulaire.

3. Carte de visite en CD-ROM selon la revendication 2, **caractérisée en ce que** le disque compact (1) présente des coins arrondis dont le rayon de courbure est 7,5 mm au maximum.

4. Carte de visite en CD-ROM selon une quelconque des revendications 1 à 3, **caractérisé en ce que** le disque compact (1) a les dimensions d'une carte-chèque.

5. Carte de visite en CD-ROM selon une quelconque des revendications 1 à 4, **caractérisé en ce que** le disque compact (1) a une largeur d'environ 85 mm et/ou une hauteur d'environ 54 mm et/ou une épaisseur d'environ 1 à 2 mm et/ou une zone extérieure abaissée (5) par 0,8 mm au maximum.

6. Carte de visite en CD-ROM selon une quelconque des revendications 1 à 5, **caractérisé en ce que** la zone intérieure (6) comprend une zone de données (8) circulaire.

7. Carte de visite en CD-ROM selon une quelconque des revendications 1 à 6, **caractérisé en ce qu'**existent deux zones extérieures (5) séparées d'eux-mêmes

8. Carte de visite en CD-ROM selon une quelconque des revendications 1 à 7, **caractérisé en ce que** le disque compact (1) est inscriptible et/ou inscrit et/ou rèinscriptible au moyen d'un graveur de CD-ROM ou d'un graveur de DVD.
